# EUROPÄISCHE PATENTSCHRIFT

(11) **EP 2 467 240 B1**
(45) Veröffentlichungstag und Bekanntmachung des Hinweises auf die Patenterteilung: **21.01.2015**
(21) Anmeldenummer: 11773186.9
(22) Anmeldetag: 12.10.2011
(51) Int. Cl.: B25J 19/02, B25J 19/06, B25J 9/16

(54) **VERFAHREN UND VORRICHTUNG ZUR SICHERHEITSÜBERWACHUNG EINES ROBOTERS**
METHOD AND APPARATUS FOR SAFETY-RELATED MONITORING OF A ROBOT
PROCÉDÉ ET DISPOSITIF POUR LA SURVEILLANCE DE SÉCURITÉ D'UN ROBOT

(30) Priorität: 05.11.2010 DE 102010050547
(43) Veröffentlichungstag der Anmeldung: 27.06.2012
(73) Patentinhaber: KUKA Laboratories GmbH, 86165 Augsburg (DE)
(72) Erfinder: BONIN, Uwe, 86316 Friedberg (DE)
(74) Vertreter: Schlotter, Alexander Carolus Paul
(86) Internationale Anmeldenummer: PCT/EP2011/005124
(87) Internationale Veröffentlichungsnummer: WO 2012/059170

(56) Entgegenhaltungen:
- DE-A1- 10 152 543
- DE-A1-102007 028 390
- US-A- 4 602 163

## Beschreibung

Die vorliegende Erfindung betrifft eine Vorrichtung gemäß dem Oberbegriff des Anspruchs 1 zur Sicherheitsüberwachung eines Roboters mit einer berührungslosen

Erfassungseinrichtung, insbesondere einem Laserscanner, sowie ein Verfahren zur Sicherheitsüberwachung mit einer solchen Vorrichtung.

Eine solche Vorrichtung ist aus der DE-A1-10 2007 028 390 bekannt.

Zur Sicherheitsüberwachung von Robotern ist es aus der Praxis einerseits bekannt, deren Arbeitsraum mit einer berührungslosen Erfassungseinrichtung zu überwachen. Beispielsweise kann ein Zugang zu einer Automationszelle mit einem Laser überwacht werden, der eine Lichtschranke oder einen Lichtvorhang generiert. Andere als im Betrieb vorgesehene Durchtritte von zu- bzw. abgeführten Werkstücken, etwa durch eine unbefugte Person, lösen eine Sicherheitsreaktion, zum Beispiel einen Sicherheitshalt des Roboters aus. Die Erfassungseinrichtung ist hierzu entsprechend des gewünschten Überwachungsbereichs ausgestaltet.

Aus der Praxis ist es auch bekannt, Gelenkpositionen des Roboters zu erfassen und direkt gegen vorgegebene Positionsgrenzwerte oder indirekt, beispielsweise nach Transformation auf eine kartesische Position eines TCPs, zu überwachen. Weicht jedoch die tatsächliche Kinematik des Roboters, beispielsweise infolge einer Deformation nach einer Kollision, von einer theoretischen Kinematik, ab, wie sie etwa der Transformation auf die kartesische Positionen des TCPs zugrundelegt, kann unter Umständen eine gefährliche reale TCP-Position anhand der erfassten Gelenkpositionen nicht mehr sicher erkannt werden.

Unabhängig davon ist es aus der Praxis bekannt, einen Roboter mittels einer hierfür vorgesehenen berührungslosen Erfassungseinrichtung, insbesondere einem Laserscanner, zu vermessen, um eine Steuerung, beispielsweise ein dieser zugrundeliegendes kinematisches Modell des Roboters, zu kalibrieren und so die Genauigkeit zu erhöhen, Temperaturdrift zu kompensieren oder dergleichen.

Die DE 10 2007 028 390 A1 betrifft ein System zur automatisierten Anpassung von Prozessparametern wenigstens einer Handhabungseinrichtung, welche mit wenigstens einer Sicherheitssteuerung zur Überwachung der Handhabungseinrichtung zusammenwirkt.

Die DE 101 52 543 A1 betrifft ein Verfahren samt Vorrichtung zum Steuern einer sicherheitsrelevanten Funktion für eine Maschine. Dabei wird ein Überwachungsbereich von einem Sensor erfasst und überwacht und dadurch eine Position, Geschwindigkeit und/oder eine Bewegungsrichtung eines im Überwachungsbereich befindlichen Objektes erkannt.

Die US 4 602 163 A offenbart ein Verfahren zur Korrektur einer Positionsinformation einer Maschine. Die Maschine umfasst Encoder zum groben Erfassen von Positionsinformation. Über ein elektro-optisches Messverfahren, welches relativ zu einem Referenzpunkt misst, wird zusätzlich eine Korrekturinformation erfasst.

Aufgabe der vorliegenden Erfindung ist es, die Sicherheitsüberwachung von Robotern zu verbessern.

Diese Aufgabe wird durch eine Vorrichtung mit den Merkmalen des Anspruchs 1 und ein Verfahren mit den Merkmalen des Anspruchs 7 gelöst. Vorteilhafte Weiterbildungen sind Gegenstand der Unteransprüche.

Der vorliegenden Erfindung liegt die Idee zugrunde, eine ohnehin zum Überwachen eines Arbeitsraums eines Roboters notwendige berührungslose Erfassungseinrichtung, vorzugsweise einen oder mehrere Laser, die durch Lichtschranken oder -vorhängen einen oder mehrere Zugänge zum Arbeitsraum überwachen, zusätzlich zum Vermessen des Roboters zu verwenden. Hierdurch kann vorteilhaft eine der bisher zwei eigenständigen Erfassungseinrichtungen eingespart werden.

Entsprechend weist eine erfindungsgemäße Vorrichtung zur Sicherheitsüberwachung eines oder mehrerer Roboter eine berührungslose Erfassungseinrichtung auf, die in einem Überwachungsmodus einen Arbeitsraum eines oder mehrere Roboter, insbesondere einer Automationszelle, überwacht.

Die Überwachung kann vorzugsweise eine berührungslose Abtastung des Arbeitsraumes, etwa mit Ultraschall, eine berührungslose Erfassung von thermischer und/oder elektromagnetischer Strahlung und/oder eines elektromagnetischen Feldes, und/oder eine Auswertung von einem oder mehreren Bildern des Arbeitsraums umfassen, um nicht vorgesehene Objekte innerhalb des Arbeitsraumes zu erfassen. In einer bevorzugten Ausführung ist die Erfassungseinrichtung zum Überwachen eines oder mehrerer Zugänge zu dem Arbeitsraum eingerichtet. Insbesondere hierzu kann in einer bevorzugten Ausführung die Erfassungseinrichtung einen oder mehrere optische Emitter, insbesondere Laser, aufweisen, die sichtbare oder unsichtbare, insbesondere infrarote oder ultraviolette, elektromagnetische Strahlung aussenden. Die ausgesandte Strahlung wird durch Empfänger erfasst. Dabei kann gleichermaßen eine Erfassung nicht unterbrochener Strahlung nach dem Prinzip einer Lichtschranke bzw. eines Lichtvorhangs, oder die Erfassung von einem Objekt reflektierter Strahlung, insbesondere die Erfassung eines Abstandes zum Objekt auf Basis einer Strahllaufzeit oder Frequenzverschiebung, vorgesehen sein. Bevorzugt ist zu letzterem ein Empfänger in der Nähe eines Emitters der Erfassungseinrichtung angeordnet, zur Erfassung nicht unterbrochener Strahlung hingegen dem Emitter gegenüberliegend. Gleichermaßen kann auch mit den vorstehend beschriebenen optischen Emittern und Empfängern der Arbeitsraum berührungslos abgetastet werden.

Erfindungsgemäß ist nun ein Umschaltmittel vorgesehen, das die Erfassungseinrichtung, vorzugsweise wahlweise, etwa nach Eingabe durch einen Bediener, oder zu vorgegebenen Zeitpunkten, insbesondere periodisch, in einen Vermessungsmodus umschaltet, in dem ein oder mehrere Roboter vermessen werden.

Umfasst die Erfassungseinrichtung, wie vorstehend ausgeführt, einen oder mehrere Emitter, insbesondere Laser, so können durch diese(n) vorzugsweise Abstände zu einem oder mehreren Referenzobjekten auf einem Roboter, insbesondere reflektierenden Markern, erfasst werden, die zusammen mit der Position und Orientierung des Emitters und Empfängers eine kartesische Position des roboterfesten Referenzobjektes und damit des Roboters bestimmen. Gleichermaßen ist es möglich, stattdessen zum Beispiel die Kontur des Roboters durch Abtasten, insbesondere mit einem oder mehreren Lasern, oder durch Auswertung eines Bildes, zu erfassen.

Allgemein wird unter einem Vermessen eines Roboters im Sinne der vorliegenden Erfindung insbesondere die Erfassung einer ein, zwei- oder dreidimensionalen Position und/oder Orientierung eines oder mehrerer roboterfester Bezugsmerkmale wie Ecken, Kanten, Gelenkpunkte, Referenzobjekte und dergleichen relativ zueinander und/oder zu einem, insbesondere erfassungseinrichtungsfesten, Bezugssystem verstanden. Bei der Vermessung von mehreren Robotern kann zusätzlich oder alternativ auch die Position und/oder Orientierung von Bezugsmerkmalen eines Roboters relativ zu Bezugsmerkmalen eines anderen Roboters erfasst werden.

Ein Vermessungsergebnis, insbesondere eine oder mehrere der vorgenannten Bezugsmerkmalpositionen und/oder -orientierungen, kann dann in einer bevorzugten Ausführung mit einem vorangegangenen Vermessungsergebnis verglichen werden, wobei ein Roboter bei beiden Vermessungen in einer bevorzugten Ausführung durch die Steuerung in dieselbe Pose, insbesondere mit denselben Gelenkpositionen, gefahren wird, um so eine Kinematikänderung des Roboters, beispielsweise infolge Kollisionen oder thermischer Verformungen, zu erfassen. Gleichermaßen kann ein Vermessungsergebnis, gegebenenfalls nach entsprechender Transformation, mit einer vorgegebenen Referenz, beispielsweise der theoretischen Position des TCPs, verglichen werden, die sich aus einem kinematischen Modell des Roboters ergibt.

In einer bevorzugten Ausführung weist die Erfassungseinrichtung zwei oder mehr, insbesondere optische, Emitter auf, die voneinander beabstandet sind. Sind beispielsweise mehrere Zugänge zu einem Arbeitsraum vorgesehen, etwa zur Zu- und Abfuhr von Werkstücken auf einem den Arbeitsraum durchlaufendenden Förderer, und wird jeder der Zugänge durch wenigstens einen optischen Emitter und Empfänger, insbesondere einen eine Lichtschranke oder einen Lichtvorhang bildenden Laser, überwacht, können zwei oder mehr Emitter und Empfänger im Vermessungsmodus zur Vermessung eines Roboters verwendet werden. Dies kann insbesondere die Erfassung auf einem Roboter verteilter Bezugsmerkmale in derselben Roboterpose erleichtern.

Während üblicherweise im Überwachungsmodus keine Erfassung eines Roboters durch die Erfassungseinrichtung vorgesehen ist und hierzu beispielsweise Zugänge überwachende Laser entsprechend am Rand des Arbeitsraums postiert werden, muss ein zu vermessender Roboter sich erfindungsgemäß im Vermessungsmodus wenigstens teilweise in einem Erfassungsbereich der Erfassungseinrichtung befinden, um von dieser vermessen zu werden. Hierzu kann ein in der Sicherheitsüberwachung vorgesehener Arbeitsraum des Roboters durch das Umschaltmittel so verändert werden, dass der Roboter im Vermessungsmodus in den Erfassungsbereich der Erfassungseinrichtung fahren kann, ohne dass eine Sicherheitsüberwachung beispielsweise von Gelenkpositionen anspricht. Allgemein ist in einer bevorzugten Ausführung vorgesehen, dass ein zu vermessender Roboter im Vermessungsmodus der Sicherheitsüberwachung wenigstens teilweise in einen Erfassungsbereich der Erfassungseinrichtung bewegt wird.

Bevorzugt ist die Erfassungseinrichtung so ausgebildet, insbesondere relativ zum Arbeitsraum positioniert, dass sie diesen im Überwachungsmodus ganz oder teilweise überwachen und im Vermessungsmodus einen oder mehrere darin befindliche Roboter vermessen kann. In einer vorteilhaften Ausführung kann eine Verstelleinrichtung vorgesehen sein, die einen Erfassungsbereich der Erfassungseinrichtung verändert, wenn diese zwischen dem Überwachungs- und dem Vermessungsmodus umgeschaltet wird. Eine solche Verstelleinrichtung kann insbesondere optische Mittel wie Linsen, Spiegel, Lichtleiter und dergleichen aufweisen und so beispielsweise einen Laserstrahl wahlweise als Lichtschranke auf einen Zugang oder als Vermessungsstrahl auf den Roboter richten. Zusätzlich oder alternativ kann eine mechanische Verstellung, beispielsweise eine Verschiebe-, Dreh- und/oder Schwenkeinrichtung, vorgesehen sein, die die Position und/oder Orientierung der Erfassungseinrichtung verändert, wenn diese zwischen dem Überwachungs- und dem Vermessungsmodus umgeschaltet wird.

Wenn im Vermessungsmodus der Arbeitsraum zeitweise nicht durch die Erfassungseinrichtung überwacht wird, da diese einen, vorzugsweise sicher stehenden, insbesondere sicher auf Stillstand überwachten Roboter vermisst, ist in einer bevorzugten Ausführung ein zusätzliches Sicherungsmittel zum Sichern des Arbeitsraumes, insbesondere eines durch die Erfassungseinrichtung überwachten Zugangs, und/oder eines oder mehrerer Roboter, vorzugsweise nur im Vermessungsmodus, vorgesehen.

Dieses kann in einer besonders einfachen Ausgestaltung eine mechanische Sperre eines während der Robotervermessung nicht mehr durch die Erfassungseinrichtung überwachten Zugangs, beispielsweise eine Tür, sein. Zusätzlich oder alternativ kann beispielsweise eine sichere Stillstandsüberwachung, etwa durch sichere, insbesondere redundante Überwachung von Robotergelenkpositionen, vorgesehen sein. In einer bevorzugten Weiterbildung ist das zusätzliche Sicherungsmittel zum Sichern des Arbeitsraumes und/oder wenigstens eines Roboters in sicherer Technik mit dem Umschaltmittel derart gekoppelt, dass ein Umschalten in den Vermessungsmodus nur bei aktiviertem Sicherungsmittel möglich ist oder das Sicherungsmittel aktiviert. Ein Mittel im Sinne der vorliegenden Erfindung kann allgemein gleichermaßen soft- und/oder hardwaremäßig ausgebildet sein, insbesondere durch ein oder mehrere Programme oder Unterprogramme bzw. Rechner, die vorzugsweise in einer Robotersteuerung oder einer Zellensteuerung für mehrere Roboter implementiert oder als eigenständige Sicherheitsüberwachungseinrichtung ausgebildet sein können.

Die erfindungsgemäße Vorrichtung findet in dem erfindungsgemäßen Verfahren nach Anspruch 7 Anwendung, dem die zusätzliche Idee zugrundeliegt, dass eine Sicherheitsüberwachung auf Basis erfasster Gelenkpositionen eines Roboters nur dann sicher ist, wenn unter anderem eine Kinematik, insbesondere Achsabstände zwischen den Gelenken, nicht zu stark von einer Referenz, beispielsweise einem Kinematikmodell des Roboters abweicht. Daher wird erfindungsgemäß vorgeschlagen, den Roboter, vorzugsweise in vorgegebenen Abständen, insbesondere periodisch, zusätzlich durch die berührungslose Erfassungseinrichtung der erfindungsgemäßen Vorrichtung zu vermessen, und eine Sicherheitsreaktion auszulösen, falls eine Abweichung eines Vermessungsergebnisses von einer Referenz einen vorgegebenen Grenzwert übersteigt.

Demnach werden eine oder mehrere Gelenkpositionen eines Roboters erfasst. Dabei wird unter einer Gelenkposition im Sinne der vorliegenden Erfindung insbesondere die Stellung eines Gelenkes, beispielsweise die Winkellage eines Drehgelenkes, aber zur kompakteren Darstellung auch eine zeitliche Ableitung hiervon, insbesondere eine Gelenkgeschwindigkeit, verstanden, unter einer Erfassung entsprechend die direkte Erfassung, insbesondere durch einen Dreh- oder Weggeber, vorzugsweise einen Resolver oder Encoder, aber auch eine indirekte Erfassung, etwa nach Zeitintegration oder -differentiation.

Die ausgelöste Sicherheitsreaktion kann insbesondere einen Sicherheitshalt des Roboters, vorzugsweise einen STOP 0, STOP 1 oder STOP 2, aber auch das Anfahren einer vorgegebenen Stillstandsposition oder die Reduzierung einer Betriebsgeschwindigkeit des Roboters umfassen.

In einer bevorzugten Ausführung kann die Vermessung eines Roboters in sicherer Technik, insbesondere durch redundante, vorzugsweise diversitäre, Einrichtungen und/oder Verfahren, erfolgen.

Wie vorstehend erläutert, kann ein Vermessungsergebnis insbesondere die Position und/oder Orientierung von einem oder mehreren Bezugsmerkmalen eines Roboters umfassen. Dieses kann, gegebenenfalls nach entsprechender Transformation, mit einer Referenz, insbesondere einem Kinematikmodell des Roboters oder einer vorhergehenden Referenzvermessung, verglichen werden, wobei eine Sicherheitsreaktion ausgelöst wird, wenn eine Abweichung, beispielsweise eine maximale oder gemittelte Abweichung zwischen Werten für dieselbe Größe, etwa Komponenten der kartesischen TCP-Position, einen vorgegebenen Grenzwert übersteigt.

In einer bevorzugten Ausführung wird der Roboter in verschiedenen Posen vermessen, wobei jeweils die Abweichungen von zugeordneten Referenzen bestimmt werden. Dies erhöht die Zuverlässigkeit der Vermessung. In einer vorteilhaften Weiterbildung können die Referenzen dynamisch sein, d.h. den Roboter in seinem bewegten Zustand abbilden. So kann beispielsweise ein flexibler Roboterarm bei schnellen Bewegungen infolge seiner Trägheit stärkere Verformungen aufweisen. Werden diese in der dynamischen Referenz, beispielsweise in Positionen von Bezugsmerkmalen, berücksichtigt, kann der Roboter während der Bewegung vermessen und das Vermessungsergebnis mit der Referenz verglichen werden.

Weitere Vorteile und Merkmale ergeben sich aus den Unteransprüchen und den Ausführungsbeispielen. Hierzu zeigt, teilweise schematisiert:
- Fig. 1:: eine Sicherheitsüberwachung eines Roboters nach einer Ausführung der vorliegenden Erfindung in einem Überwachungsmodus; und
- Fig. 2:: die Sicherheitsüberwachung der Fig. 1 in einem Vermessungsmodus.

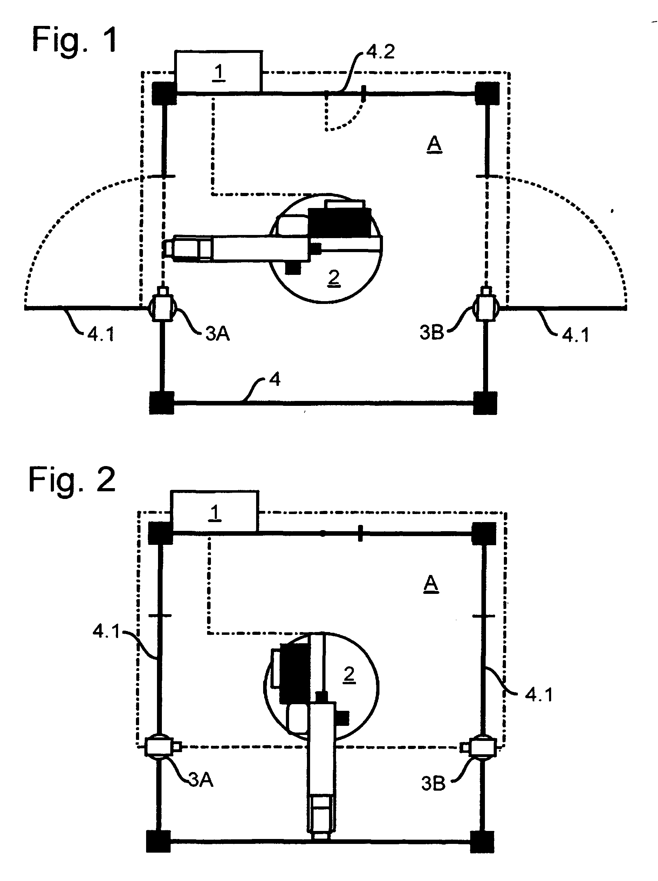

Fig. 1 zeigt in einer Draufsicht einen sechsachsigen Knickarmroboter 2 in einem durch einen Sicherheitszaun 4 begrenzten Arbeitsraum A einer Automationszelle. Im Zaun 4 sind neben einer normalerweise geschlossenen Zugangstür 4.2 zwei einander gegenüberliegende Zugänge vorgesehen, durch die ein Förderer Werkstücke zu der Zelle zu- und abführt (nicht dargestellt).

Die Zugänge werden in sicherer Technik durch eine Sicherheitsüberwachungsvorrichtung 1 überwacht, die in einer außerhalb der Zelle angeordneten Robotersteuerung implementiert ist, beispielsweise mit eigenständigen Rechenmitteln oder in die Bewegungssteuerung des Roboters integriert.

Hierzu ist die Vorrichtung 1 in sicherer Technik zum Einen, wie strichpunktiert in Fig. 1 angedeutet, mit dem Roboter 2 drahtgebunden oder drahtlos signalverbunden. Resolver an den Gelenken des Knickarmroboters übermitteln dessen Gelenkpositionen, aus denen die Sicherheitsüberwachungsvorrichtung 1 beispielsweise die kartesische Position des TCPs und die Gelenkgeschwindigkeiten ermittelt und gegen Grenzwerte, insbesondere Grenzen des Arbeitsraumes A bzw. Maximalgeschwindigkeiten in den Gelenken und/oder des TCPs überwacht.

Zum Anderen ist die Sicherheitsüberwachungsvorrichtung 1 in sicherer Technik mit zwei Laserscannern 3A, 3B verbunden, die in einem Überwachungsmodus (Fig. 1) die einander gegenüberliegenden Zugänge mittels Lichtvorhang überwachen und hierzu die Zugänge zyklisch vertikal abfahren, wie in Fig. 1 durch strichlierte Linien angedeutet. Die Laserscanner 3A, 3B sind an Türen 4.1 befestigt, die zum Verschließen der Zugänge vorgesehen sind.

Man erkennt, dass zum einen der Roboter 2 nicht in den (in Fig. 1 strichliert angedeuteten) Überwachungserfassungsbereich der Laserscanner 3A, 3B fahren kann, da er hierzu seinen Arbeitsraum A verlassen müsste. Zum anderen könnte eine Verformung des Roboters beispielsweise infolge einer Kollision, trotz korrekter, durch die Resolver überwachter Gelenkpositionen dazu führen, dass sein TCP den Arbeitsraum A verlässt.

Daher wird die aus den zwei Laserscannern 3A, 3B gebildete Erfassungseinrichtung durch die Sicherheitsüberwachungsvorrichtung 1 periodisch von dem in Fig. 1 dargestellten Überwachungsmodus, in dem sie die einander gegenüberliegenden Zugänge zum Arbeitsraum als Lichtvorhang überwacht, in einen Vermessungsmodus (Fig. 2) umgeschaltet. Hierzu betätigt die Sicherheitsüberwachungsvorrichtung 1 eine Verstelleinrichtung (nicht dargestellt), die die Türen 4.1 schließt und dabei die daran befestigten Laserscanner 3A, 3B zum Arbeitsraum A hin mitdreht. Zudem bewirkt die Sicherheitsüberwachungsvorrichtung 1, beispielsweise durch entsprechende Instruktion der Robotersteuerung, dass der Roboter 2 eine Vermessungspose (Fig. 2) einnimmt, in der die beiden einander nun gegenüberliegenden Laserscanner 3A, 3B den Roboter abtasten, beispielsweise seine Kontur oder die Lage von Referenzobjekten wie Markern (nicht dargestellt) erfassen.

Das Vermessungsergebnis, beispielsweise die Positionen erfasster Marker, wird mit einer Referenz, zum Beispiel einer vorhergehenden Referenzvermessung, verglichen. Weichen Vermessungsergebnis und Referenz um mehr als einen vorgegebenen Grenzwert voneinander ab, erkennt die Sicherheitsüberwachungsvorrichtung 1, dass die Roboterkinematik sich unzulässig verändert hat, und beschränkt als Sicherheitsreaktion beispielsweise die Verfahrgeschwindigkeit des Roboters auf einen vorgegebenen Grenzwert.

Übersteigt die Abweichung zwischen Vermessungsergebnis und Referenz den Grenzwert hingegen nicht, schaltet die Sicherheitsüberwachungsvorrichtung 1 wieder in den Überwachungsmodus (Fig. 1) um, in dem die offenen Zugänge eine Zu- und Abfuhr von Werkstücken ermöglichen und von den zurückgedrehten Laserscannern überwacht werden, während der Roboter 2 anhand seiner Gelenkpositionen überwacht wird, die auf Basis der Vermessung in eine sichere TCP-Position transformiert werden können. In analoger Weise können in nicht dargestellten Abwandlungen die Laserscanner 3A, 3B auch zur Überwachung der Zugänge zurückgedreht werden, wenn keine Türen 4.1 vorgesehen sind. Zusätzlich oder alternativ zu einer mechanischen Bewegung, insbesondere Drehung der Laserscanner können deren Erfassungsbereiche zwischen Überwachungs- und Vermessungsmodus beispielsweise auch durch eine entsprechend variable Laserscanneroptik (nicht dargestellt) umgeschaltet werden.

### Bezugszeichenliste

- 1: Sicherheitsüberwachungsvorrichtung
- 2: Roboter
- 3A, B: Laserscanner
- 4: Sicherheitszaun
- 4.1,2: Sicherheitstür
- A: Arbeitsraum

## Patentansprüche

1. Vorrichtung (1) zur Sicherheitsüberwachung wenigstens eines Roboters (2), mit einer berührungslosen Erfassungseinrichtung (3A, 3B) zum Überwachen eines Arbeitsraums (A) des wenigstens einen Roboters (2) in einem Überwachungsmodus , **gekennzeichnet durch** ein Umschaltmittel (1) zum Umschalten der Erfassungseinrichtung in einen Vermessungsmodus zum Vermessen des wenigstens einen Roboters (2).

2. Vorrichtung nach Anspruch 1, **dadurch gekennzeichnet, dass** die Erfassungseinrichtung zum Überwachen eines Zugangs zu dem Arbeitsraum in dem Überwachungsmodus eingerichtet ist.

3. Vorrichtung nach einem der vorhergehenden Ansprüche, **dadurch gekennzeichnet, dass** die Erfassungseinrichtung wenigstens einen optischen Emitter zum Aussenden elektromagnetischer Strahlung, insbesondere einen Laser (3A, 3B), und wenigstens einen Empfänger zum Empfangen der ausgesandten elektromagnetischen Strahlung aufweist.

4. Vorrichtung nach einem der vorhergehenden Ansprüche, **dadurch gekennzeichnet, dass** die Erfassungseinrichtung wenigstens zwei voneinander beabstandete Emitter (3A, 3B) aufweist.

5. Vorrichtung nach einem der vorhergehenden Ansprüche, **gekennzeichnet durch** eine, insbesondere optische und/oder mechanische, Verstelleinrichtung (4.1) zur Änderung eines Erfassungsbereichs der Erfassungseinrichtung zwischen einem Überwachungsbereich, der im Überwachungsmodus erfasst wird, und einem Vermessungsbereich, der im Vermessungsmodus erfasst wird.

6. Vorrichtung nach einem der vorhergehenden Ansprüche, **gekennzeichnet durch** ein zusätzliches Sicherungsmittel (4.1) zum Sichern des Arbeitsraumes, insbesondere eines **durch** die Erfassungseinrichtung überwachten Zugangs, und/oder eines Roboters im Vermessungsmodus.

7. Verfahren zur Sicherheitsüberwachung wenigstens eines Roboters (2) mit einer Vorrichtung nach einem der vorhergehenden Ansprüche,
wobei wenigstens ein Gelenkwert des wenigstens einen Roboters (2) durch eine berührungslose Erfassungseinrichtung (3A, 3B) erfasst wird, der wenigstens eine Roboter zusätzlich durch die berührungslose Erfassungseinrichtung (3A, 3B) vermessen und eine Sicherheitsreaktion ausgelöst wird, falls die Abweichung eines Vermessungsergebnisses von einer Referenz einen vorgegebenen Grenzwert übersteigt.

8. Verfahren nach Anspruch 7, **dadurch gekennzeichnet, dass** der Roboter in verschiedenen Posen vermessen und die Abweichungen von zugeordneten, insbesondere dynamischen, Referenzen bestimmt werden.

9. Verfahren nach einem der vorhergehenden Ansprüche 7 bis 8, **dadurch gekennzeichnet, dass** ein Gelenkwert, insbesondere eine Gelenkposition, des Roboters mit wenigstens einem Dreh- oder Weggeber, insbesondere einem Resolver, erfasst wird.

## Claims

1. An apparatus (1) for safety monitoring of at least one robot (2), comprising a non-contact detection device (3A, 3B) for monitoring a work space (A) of the at least one robot (2) in a monitoring mode, **characterized by** a switching means (1) for switching the detection device into a measuring mode for measuring of the at least one robot (2).

2. An apparatus according to claim 1, **characterized in that** the detection device is arranged for monitoring an access to the work space in the monitoring mode.

3. An apparatus according to one of the preceding claims, **characterized in that** the detection device comprises at least one optical emitter for emitting electromagnetic radiation, in particular a laser (3A, 3B), and at least one receiver for receiving the emitted electromagnetic radiation.

4. An apparatus according to one of the preceding claims, **characterized in that** the detection device comprises at least two emitters (3A, 3B) spaced apart from each other.

5. An apparatus according to one of the preceding claims, **characterized by** an adjusting device (4.1), in particular an optical and/or mechanical adjusting device, for changing a detection area of the detection device between a monitoring area; which is detected in the monitoring mode, and a measuring area, which is detected in the measuring mode.

6. An apparatus according to one of the preceding claims, **characterized by** an additional safety means (4.1) for securing the work space, in particular an access monitored by the detection device, and/or a robot in the measuring mode.

7. A method for safety monitoring of at least one robot (2) using an apparatus according to one of the preceding claims, wherein at least one joint value of the at least one robot (2) is detected by a non-contact detection device (3A, 3B), the at least one robot is additionally measured by the non-contact detection device (3A, 3B) and a safety response is triggered in case that the deviation of a measurement result from a reference exceeds a predetermined limit value.

8. A method according to claim 7, **characterized in that** the robot is measured in various poses and the deviations from assigned references, in particular dynamic references, are determined.

9. A method according to one of the preceding claims 7 to 8, **characterized in that** a joint value, in particular a joint position, of the robot, is detected using at least one rotation or displacement sensor, in particular a resolver.

## Revendications

1. Dispositif (1) pour la surveillance de sécurité d'au moins un robot (2), pourvu d'un appareil de détection sans contact (3A, 3B) destiné à surveiller un espace de travail (A) du ou des robots (2) dans un mode de surveillance, **caractérisé par** un moyen de commutation (1) destiné à commuter l'appareil de détection dans un mode de mesure pour la mesure du ou des robots (2).

2. Dispositif selon la revendication 1, **caractérisé en ce que** l'appareil de détection est conçu pour surveiller un accès à l'espace de travail dans le mode de surveillance.

3. Dispositif selon l'une quelconque des revendications précédentes, **caractérisé en ce que** l'appareil de détection comprend au moins un émetteur optique permettant d'émettre un rayonnement électromagnétique, en particulier un laser (3A, 3B) et au moins un récepteur permettant de recevoir le rayonnement électromagnétique émis.

4. Dispositif selon l'une quelconque des revendications précédentes, **caractérisé en ce que** l'appareil de détection comprend au moins deux émetteurs (3A, 3B) espacés l'un de l'autre.

5. Dispositif selon l'une quelconque des revendications précédentes, **caractérisé par** un dispositif de réglage (4.1), en particulier optique et/ou mécanique, permettant de modifier une zone de détection de l'appareil de détection entre une zone de surveillance, laquelle est détectée dans le mode de surveillance, et une zone de mesure, laquelle est détectée dans le mode de mesure.

6. Dispositif selon l'une quelconque des revendications précédentes, **caractérisé par** un moyen de blocage (4.1) supplémentaire permettant de bloquer l'espace de travail, en particulier un accès surveillé par l'appareil de détection, et/ou un robot en mode mesure.

7. Procédé pour la surveillance de sécurité d'au moins un robot (2), au moyen d'un dispositif selon l'une quelconque des revendications précédentes, au moins une valeur d'articulation du ou des robots (2) étant détectée par un appareil de détection sans contact (3A, 3B), au moins un des robots étant mesuré en plus par l'appareil de détection sans contact (3A, 3B) et une réaction de sécurité étant déclenchée au cas où l'écart entre un résultat de mesure et une référence dépasserait une valeur seuil prédéfinie.

8. Procédé selon la revendication 7, **caractérisé en ce que** le robot est mesuré dans différentes poses et les écarts par rapport à des références associées, en particulier dynamiques, sont déterminés.

9. Procédé selon l'une quelconque des revendications 7 à 8, **caractérisé en ce qu'**une valeur d'articulation, en particulier une position d'articulation, du robot est détectée au moyen d'au moins un encodeur ou un capteur de déplacement, en particulier un résolveur.
